# FASCICULE DE BREVET EUROPEEN

(11) **EP 3 535 797 B1**
(45) Date de publication et mention de la délivrance du brevet: **02.12.2020**
(21) Numéro de dépôt: 17808095.8
(22) Date de dépôt: 07.11.2017
(51) Int. Cl.: H01M 10/0567, H01M 10/0525, H01M 4/38, H01M 4/485, H01M 4/505, H01M 4/525, H01M 4/587, H01M 10/0569

(54) **ÉLECTROLYTES À BASE D'UN ADDITIF SPÉCIFIQUE DU TYPE LIQUIDE IONIQUE POUR BATTERIES AU LITHIUM**
ELEKTROLYTEN FÜR LITHIUMBATTERIEN AUF BASIS EINER SPEZIFISCHEN IONISCHEN FLÜSSIGKEIT ALS ADDITIV
ELECTROLYTES FOR LITHIUM BATTERIES BASED ON A SPECIFIC LIQUID IONIC ADDITIVE

(30) Priorité: 07.11.2016 FR 1660756
(43) Date de publication de la demande: 11.09.2019
(73) Titulaire: Commissariat à l'Energie Atomique et aux Energies Alternatives, 75015 Paris (FR)
(72) Inventeur: LE DIGABEL, Matthieu, 37260 Monts (FR); BILLER, Agnès, 37550 Saint-Avertin (FR); PENOT, Nelly, 37260 Monts (FR)
(74) Mandataire: Brevalex
(86) Numéro de dépôt international: PCT/FR2017/053034
(87) Numéro de publication internationale: WO 2018/083432

(56) Documents cités:
- EP-A1- 1 855 298
- EP-A1- 2 595 222
- WO-A1-2013/026854
- WO-A1-2016/125592
- FR-A1- 3 032 560
- US-A1- 2014 113 202

## Description

### DOMAINE TECHNIQUE

La présente invention a trait à des électrolytes non aqueux à base d'un additif spécifique du type liquide ionique, ces électrolytes étant particulièrement appropriés pour des batteries au lithium, telles que les batteries lithium-ion et, encore plus spécifiquement, pour des batteries lithium-ion à « haute tension », c'est-à-dire aptes à délivrer des tensions supérieures à 4,2 V.

Les batteries au lithium sont particulièrement intéressantes pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, des domaines spatiaux, de la microélectronique.

D'un point de vue fonctionnel, les batteries lithium-ion reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Ces électrolytes peuvent consister en un mélange comprenant au moins un solvant organique et au moins un sel de lithium pour assurer la conduction desdits ions lithium, ce qui nécessite que le sel de lithium soit dissous dans ledit solvant organique et éventuellement d'un ou plusieurs additifs.

Les sels de lithium couramment utilisés peuvent être du LiPF₆, du LiClO₄, LiAsF₆, LiBF₄, LiRSO₃, LiN(RSO₂)₂, LiC(RSO₂)₂ (R étant un atome de fluor ou un groupe perfluoroalkyle comprenant de 1 à 8 atomes de carbone), du trifluorométhanesulfonylimidure de lithium (LiTFSI), du bis(oxalato)borate de lithium (LiBOB), du bis(perfluoroéthylsulfonylimidure) de lithium (LiBETI), du fluoroalkylphosphate de lithium (LiFAP), ces sels de lithium étant classiquement dissous dans un mélange de solvants organiques à base de carbonates cycliques et/ou linéaires.

De tels électrolytes présentent une conductivité élevée (par exemple, supérieure à 1 mS/cm) et de bonnes performances électrochimiques dans une fenêtre de potentiels s'échelonnant de 0 à 4,2V (exprimé par rapport à Li⁺/Li), les rendant ainsi compatibles avec des batteries fonctionnant avec des électrodes positives et négatives, qui ne génèrent pas une tension dépassant la borne supérieure de cette fenêtre. Dans ce cas, les électrodes positives comprennent généralement, comme matériaux actifs, des matériaux actifs lamellaires, tels que LiCoO₂, LiNiO₂ ou des matériaux actifs à structure spinelle, tels que LiMn₂O₄, tandis que les électrodes négatives comprennent, le plus souvent, comme matériaux actifs, des matériaux carbonés (tel que du graphite) ou comprennent, comme matériaux actifs, un matériau oxyde à structure spinelle, tel que Li₄Ti₅O₁₂.

Au-delà de 4,2V, comme explicité dans J.Electrochem.Soc., 138, (1991) 2864, ces solutions électrolytiques se dégradent par oxydation au-delà de ce potentiel, ce qui entraîne une génération de gaz et une détérioration des performances de la batterie se traduisant par une autodécharge partielle ou totale et une diminution de la durée de vie.

Pour valoriser de nouveaux matériaux d'électrode, qui permettent d'augmenter la capacité des batteries et délivrer des tensions supérieures à 4,2 V, des recherches ont porté sur la conception de nouveaux électrolytes à base de solvant(s) ne se dégradant pas lorsqu'ils sont soumis à des différences de potentiels élevées (par exemple, de l'ordre de 5V), en jouant notamment sur l'adjonction d'additifs organiques non ioniques, tels que l'anhydride succinique, le 1,3-propane sultone, le thiophène ou d'additifs ioniques, tels que des sels comme le bis(oxalato)borate de lithium ou le difluoro(oxalato)borate de lithium.

Il a été également proposé d'utiliser, comme additifs, une catégorie particulière d'additifs ioniques que sont les liquides ioniques (tels que décrits dans US 2010/0209783).

Le document WO 2013/026854 A1 divulgue une solution d'électrolyte non-aqueux pour cellule électrochimique, comprenant un sel de lithium dissous dans un mélange de solvants carbonates non-fluorés avec 1% en poids d'un dérivé de pyrrolidinium avec un anion bis(oxalato)borate (BOB).

Les documents WO 2016/125592 A1, EP 2 595 222 A1 et EP 1 855 298 A1 décrivent tous des compositions d'électrolyte non-aqueux comprenant un solvant organique non-fluoré, un sel de lithium et un liquide ionique non-fluoré constitué par l'association d'un cation comportant un atome d'azote porteur de la charge positive et d'un anion borate.

Le document US 2014/113202 A1 divulgue des compositions d'électrolyte non-aqueux comprenant à la fois un solvant organique, tel qu'un carbonate cyclique ou une sulfone, et un liquide ionique avec un anion chélatoborate, tel que le bis(oxalato)borate (BOB) ou le bis(malonato)borate (BMB), en association avec un cation comportant un atome d'azote porteur de la charge positive.

Le document FR 3 032 560 A1 décrit un électrolyte comprenant de l'hexafluorophosphate de lithium, un mélange de solvants carbonates non-fluorés, et du bis(trifluorométhanesulfonyl)imidure de 1-butyl-1-méthylpyrrolidinium (BMP-TFSI).

Plus spécifiquement, les liquides ioniques sont des sels liquides à des températures inférieures à 100°C. Cette faible température de fusion comparée à celle des sels fondus classiques (comme LiCI, NaCI) provient de la structure organique des ions (et notamment du cation) constituant ces sels, les cations étant plus volumineux que celui des sels fondus, ce qui induit au final une plus faible interaction entre les ions. Les liquides ioniques sont, le plus souvent, utilisés dans la formulation d'électrolytes pour améliorer la sécurité, puisqu'ils présentent une haute stabilité thermique et une faible inflammabilité.

Les auteurs de la présente invention se sont fixé pour objectif d'explorer la voie des liquides ioniques pour être utilisés comme additifs dans des électrolytes destinés en particulier à des batteries au lithium pouvant délivrer de hautes tensions, en particulier, des tensions supérieures à 4,2 V et, par exemple, pouvant aller jusqu'à 5 V.

Aussi, ils ont pu découvrir, de manière surprenante, qu'en ajoutant un additif du type liquide ionique spécifique, dans un électrolyte, il est possible dans le contexte des batteries susmentionnées d'obtenir d'excellents résultats en termes d'efficacité coulombique et en termes de limitation de perte de capacité après un nombre de cycles important.

### EXPOSÉ DE L'INVENTION

Ainsi, l'invention a trait à des électrolytes appartenant à la famille des électrolytes conducteurs d'ions lithium comprenant au moins un solvant organique non fluoré et au moins un sel de lithium, caractérisé en ce qu'ils comprennent, en outre, un liquide ionique non fluoré constitué par l'association d'un cation qui est un composé comportant au moins un atome d'azote, dont la charge positive est portée par ledit atome d'azote et d'un anion borate.

Avec une telle combinaison d'ingrédients, les auteurs de la présente invention ont pu mettre en évidence une amélioration significative des performances des batteries au lithium, notamment celles fonctionnant à haute tension, en termes d'efficacité coulombique et de limitation de pertes de capacités, par rapport à des électrolytes comprenant les mêmes ingrédients hormis la présence d'un tel additif.

De préférence, les électrolytes de l'invention sont constitués exclusivement dudit au moins un solvant organique non fluoré, dudit au moins un sel de lithium et dudit liquide ionique non fluoré.

Comme mentionné ci-dessus, l'électrolyte de l'invention comprend au moins un solvant organique non fluoré.

En particulier, l'électrolyte peut comprendre au moins un solvant organique choisi parmi les solvants carbonates, les solvants sulfones et les mélanges de ceux-ci.

Concernant les solvants carbonates, il peut s'agir de solvants carbonates linéaires (ou, en d'autres termes, non cycliques) ou de solvants carbonates cycliques et des mélanges de ceux-ci.

A titre d'exemples de solvants carbonates linéaires, on peut citer les solvants carbonates de formule (I) suivante :

R¹-O-CO-O-R² (I)

dans laquelle R¹ et R² représentent, indépendamment, l'un de l'autre, un groupe alkyle linéaire ou ramifié comportant, par exemple, de 1 à 7 atomes de carbone.

De manière particulière, R¹ et R² peuvent représenter, indépendamment, l'un de l'autre, un groupe alkyle linéaire comportant, par exemple, de 1 à 7 atomes de carbone.

Comme solvants carbonates linéaires spécifiques, on peut citer le carbonate de diméthyle (connu sous l'abréviation DMC), le carbonate de diéthyle (connu sous l'abréviation DEC), l'éthylméthylcarbonate (connu sous l'abréviation EMC) ou les mélanges de ceux-ci.

A titre d'exemples de solvant carbonates cycliques, on peut citer les solvants carbonates de formule (II) suivante : 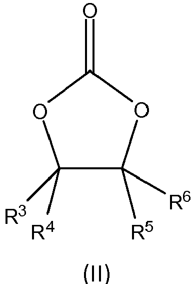 dans laquelle R³ à R⁶ représentent, indépendamment l'un de l'autre, un atome d'hydrogène, un groupe alkyle, linéaire ou ramifié, comportant de 1 à 7 atomes de carbone.

Comme exemples de solvants carbonates cycliques, on peut citer le carbonate d'éthylène (connu sous l'abréviation EC), le carbonate de propylène (connu sous l'abréviation PC) ou les mélanges de ceux-ci.

Concernant les solvants sulfones, il peut s'agir de solvants sulfones linéaires (ou, en d'autres termes, non cycliques) ou de solvants sulfones cycliques.

Lorsqu'il s'agit d'un solvant sulfone linéaire, il peut s'agir d'un solvant sulfone linéaire symétrique ou asymétrique.

Par « symétrique », on entend un solvant sulfone linéaire, qui comprend, de part et d'autre du groupe -SO₂-, des groupes identiques.

Par « asymétrique », on entend un solvant sulfone linéaire, qui comprend, de part et d'autre du groupe -SO₂-, des groupes différents.

A titre d'exemples de solvants sulfones linéaires, on peut citer les solvants sulfones répondant à la formule (III) suivante :

R⁷-SO₂-R⁸ (III)

dans laquelle R⁷ et R⁸ représentent, indépendamment l'un de l'autre, un groupe alkyle, linéaire ou ramifié, comprenant de 1 à 7 atomes de carbone ou un groupe aryle.

Par exemple, R⁷ et R⁸ peuvent représenter, indépendamment l'un de l'autre, un groupe méthyle (-CH₃), un groupe éthyle (-CH₂-CH₃), un groupe *n*-propyle (-CH₂-CH₂-CH₃), un groupe *n*-butyle (-CH₂-CH₂-CH₂-CH₃), un groupe *n-*pentyle (-CH₂-CH₂-CH₂-CH₂-CH₃), un groupe *n*-hexyle (-CH₂-CH₂-CH₂-CH₂-CH₂-CH₃), un groupe *n*-heptyle (-CH₂-CH₂-CH₂-CH₂-CH₂-CH₂-CH₃), un groupe *iso*-propyle (-CH(CH₃)₂), un groupe *iso*-butyle (-CH₂CH(CH₃)₂).

Des solvants sulfones linéaires spécifiques peuvent être l'éthylméthylsulfone (connue sous l'abréviation EMS), la di(*n*-butyl)sulfone, la méthylisopropylsulfone, l'éthylisopropylsulfone, la diéthylsulfone, la di-*n-*propylsulfone, la diméthylsulfone, la 2-fluorophénylméthylsulfone.

A titre d'exemples de solvants sulfones cycliques, on peut citer les solvants sulfones répondant à la formule (IV) suivante : 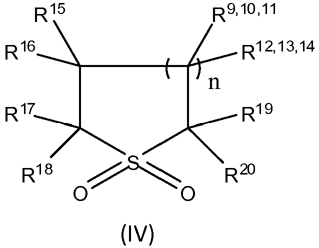 dans laquelle :
- R⁹, R¹², R¹⁵ à R²⁰ et, le cas échéant, R¹⁰ et R¹², R¹¹ et R¹⁴ représentent, indépendamment l'un de l'autre, un atome d'hydrogène ou un groupe alkyle, linéaire ou ramifié, comportant de 1 à 7 atomes de carbone ;
- n est en entier allant de 1 à 3, ce qui signifie, en d'autres termes, que :
   - lorsque n est égal à 1, le solvant sulfone répond à la formule (V) suivante : 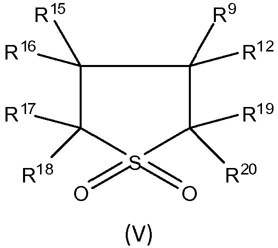 R⁹, R¹² et les R¹⁵ à R²⁰ étant tels que définis ci-dessus ;
   - lorsque n est égal à 2, le solvant sulfone répond à la formule (VI) suivante : 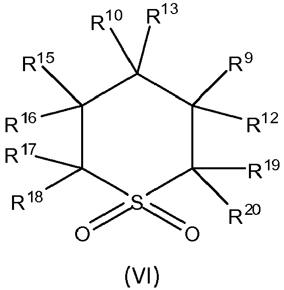 R⁹, R¹², R¹⁰, R¹³ et les R¹⁵ à R²⁰ étant tels que définis ci-dessus ;
   - lorsque n est égal à 3, le solvant sulfone répond à la formule (VII) suivante : 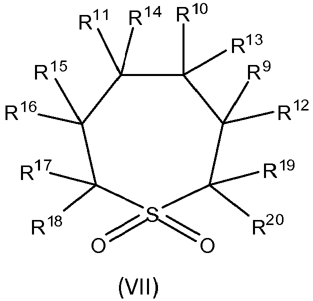 R⁹, R¹², R¹⁰, R¹³, R¹¹, R¹⁴ et les R¹⁵ à R²⁰ étant tels que définis ci-dessus.

Comme exemples spécifiques de solvants sulfones cycliques, on peut citer la tétraméthylsulfone (connue également sous le nom de sulfolane et sous l'abréviation TMS) ou la 3-méthylsulfolane.

De manière spécifique, l'électrolyte peut comprendre, comme solvant(s) :
- uniquement un solvant sulfone ou un mélange de solvants sulfones ;
- uniquement un solvant carbonate ou un mélange de solvants carbonates ; ou
- un mélange d'un ou plusieurs solvants sulfones et d'un ou plusieurs solvants carbonates.

Plus spécifiquement, l'électrolyte peut comprendre, comme solvant(s), un mélange de solvants carbonates, tel qu'un mélange d'un solvant carbonate de formule (I) ci-dessus mentionnée et d'un solvant carbonate de formule (II) ci-dessus mentionnée.

Encore plus spécifiquement, l'électrolyte peut comprendre, comme solvant(s), un mélange de carbonate d'éthylène (EC) et d'éthylméthylcarbonate (EMC) (par exemple, dans des proportions volumiques respectives 3 :7).

Le ou les solvants organiques susmentionnés peuvent être le ou les seuls solvants organiques présents dans l'électrolyte ou peuvent être mis en présence d'un ou plusieurs cosolvants, auquel le ou les solvants organiques susmentionnés sont compris dans l'électrolyte à hauteur de 10 à 90% en masse par rapport à la masse totale du mélange de solvant(s) et de cosolvant(s).

Ainsi, l'électrolyte peut comprendre, en outre, un ou plusieurs cosolvants, qui ne sont pas des solvants tels que ceux définis ci-dessus.

En particulier, le ou les cosolvants peuvent être des solvants esters répondant à la formule (VIII) suivante : 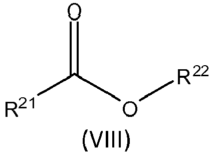 dans laquelle R²¹ et R²² représentent, indépendamment l'un de l'autre, un groupe alkyle, linéaire ou ramifié, comprenant de 1 à 7 atomes de carbone.

A titre d'exemples, il peut s'agir de l'acétate d'éthyle (connu sous l'abréviation EA), le propionate de méthyle (connu sous l'abréviation Mpr), le méthylacétate de triméthyle (connu sous l'abréviation MTMA).

Lorsqu'il(s) est (sont) présent(s), le ou les cosolvants sont, avantageusement, présents à hauteur de 10% à 90% en masse par rapport à la masse totale du mélange de solvant(s) et cosolvant(s) susmentionnés.

Comme mentionné ci-dessus, la famille d'électrolytes, à laquelle appartiennent les électrolytes de l'invention, comporte, comme élément essentiel, un additif consistant en un liquide ionique non fluoré constitué par l'association d'un cation qui est un composé comportant au moins un atome d'azote, dont la charge positive est portée par ledit atome d'azote et d'un anion borate.

Selon la présente invention, l'atome d'azote, porteur de la charge positive, appartient à un cycle hydrocarboné.

Ainsi, le cation répond à la formule (X) suivante : 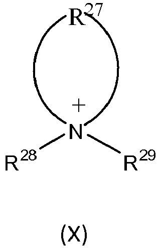 dans laquelle :
- N⁺ et R²⁷ forment un groupe alicyclique;
- R²⁸ et R²⁹ représentent, indépendamment l'un de l'autre, un groupe alkyle linéaire comprenant de 1 à 5 atomes de carbone.

Des exemples de cations de formule (X) peuvent être :
*des cations pipéridinium, tels que le cation de formule suivante : 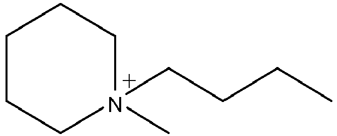 également nommé N-butyl-N-méthylpipéridinium ;
*des cations pyrrolidinium, tels que le cation de formule suivante : 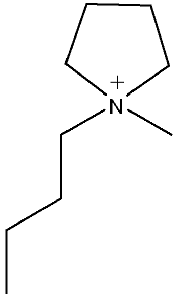 également nommé N-butyl-N-méthylpyrrolidinium (ou dénommé autrement 1-n-butyl-1-méthylpyrrolidinium).

Selon la présente invention, le cation est un composé répondant à la formule (X) définie ci-dessus, et plus spécifiquement, dans laquelle R²⁸ et R²⁹ représentent, indépendamment l'un de l'autre un groupe alkyle linéaire comprenant de 1 à 5 atomes de carbone. De préférence encore, le cation est avantageusement un cation pyrrolidinium, tel qu'un cation N-butyl-N-méthylpyrrolidinium, dont la formule est explicitée plus haut.

L'anion du liquide ionique utilisé comme additif dans les électrolytes de l'invention est un anion borate, c'est-à-dire un anion comportant un atome de bore chargé négativement et lié à 4 atomes d'oxygène.

Plus spécifiquement, il peut s'agir d'un anion *bis*(oxalato)borate répondant à la formule (XII) suivante :

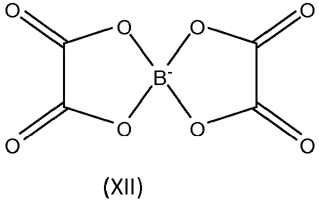

Le liquide ionique peut être présent dans l'électrolyte selon une teneur allant de 0,1% à 10% en masse par rapport à la masse totale de l'électrolyte, de préférence encore, de 0,5 % à 5% par rapport à la masse totale de l'électrolyte.

Un liquide ionique avantageux est un liquide ionique résultant de l'association d'un cation pyrrolidinium et d'un anion de formule (XII) telle que définie ci-dessus, et plus spécifiquement un liquide répondant à la formule (XIII) suivante : 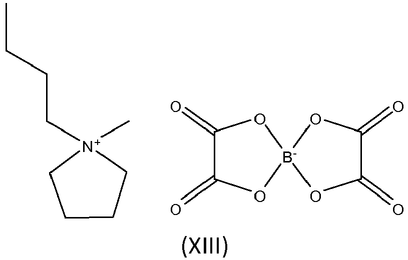 connu sous la terminologie de *bis*(oxalato)borate de 1-n-butyl-1-méthylpyrrolidinium.

Le sel de lithium quant à lui peut être de l'hexafluorophosphate de lithium (LiPF₆), de l'hexafluoroarsénate de lithium (LiAsF₆), du *bis*(trifluorométhylsulfonyl)imidure de lithium (connu sous l'abréviation LiTFSI) du bis(fluorosulfonyl)imidure de lithium (connu sous l'abréviation LiFSI), du tétrafluoroborate de lithium (LiBF₄), du perchlorate de lithium (LiClO₄). Le sel de lithium peut être utilisé seul ou en mélange.

Le sel de lithium peut être présent dans une gamme de concentrations allant de 0,1 mol/L à 2 mol/L.

De préférence, le sel de lithium est LiPF₆, par exemple, à une concentration de 1 M.

En outre, pour améliorer encore plus les propriétés électrochimiques des électrolytes de l'invention, ceux-ci peuvent comprendre un ou plusieurs autres additifs du type anhydride et, plus spécifiquement, choisis parmi l'anhydride maléique, l'anhydride succinique, l'anhydride itaconique, l'anhydride glutarique et les mélanges de ceux-ci. De préférence, les électrolytes de l'invention comprennent de l'anhydride maléique.

Ce ou ces additifs du type anhydride peuvent être compris dans l'électrolyte à raison de 0,01 % à 5%, de préférence, de 0,01 à 2% en masse par rapport à la masse totale de l'électrolyte.

Des électrolytes spécifiques conformes à l'invention peuvent être :
- un électrolyte comprenant un mélange EC-EMC (par exemple, en proportion volumique 3:7), du *bis*(oxalato)borate de 1-n-butyl-1-méthylpyrrolidinium (1% massique par rapport à la masse totale de l'électrolyte) et du LiPF₆ 1M ; et
- un électrolyte comprenant un mélange EC-EMC (par exemple, en proportion volumique 3:7), du *bis*(oxalato)borate de 1-n-butyl-1-méthylpyrrolidinium (2% massique par rapport à la masse totale de l'électrolyte) et du LiPF₆ 1M ;
- un électrolyte comprenant un mélange EC-EMC (par exemple, en proportion volumique 3:7), du *bis*(oxalato)borate de 1-n-butyl-1-méthylpyrrolidinium (1% massique par rapport à la masse totale de l'électrolyte), de l'anhydride maléique (1% massique par rapport à la masse totale de l'électrolyte) et du LiPF₆ 1M.

Les électrolytes de l'invention, comme déjà évoqué ci-dessus, sont particulièrement adaptés pour entrer dans la constitution de batteries au lithium.

Ainsi l'invention a trait à une batterie au lithium, telle qu'une batterie lithium-ion, comprenant au moins une cellule électrochimique comprenant un électrolyte tel que défini ci-dessus disposé entre une électrode positive et une électrode négative.

En particulier, les électrolytes de l'invention sont particulièrement efficaces dans des batteries au lithium aptes à fournir une tension élevée (par exemple, de l'ordre de 5V par cellule), ces électrolytes étant ainsi compatibles avec des électrodes à fort potentiel.

On précise que, par électrode positive, on entend, classiquement, dans ce qui précède et ce qui suit, l'électrode qui fait office de cathode, quand la batterie débite du courant (c'est-à-dire lorsqu'elle est en processus de décharge) et qui fait office d'anode lorsque la batterie est en processus de charge.

On précise que, par électrode négative, on entend, classiquement, dans ce qui précède et ce qui suit, l'électrode qui fait office d'anode, quand la batterie débite du courant (c'est-à-dire lorsqu'il est en processus de décharge) et qui fait office de cathode, lorsque la batterie est en processus de charge.

En particulier, l'électrode positive peut comprendre, comme matériau d'insertion du lithium ou matériau actif, un matériau à insertion de lithium, dont la tension de décharge est supérieure à 4,2V exprimée par rapport au couple Li⁺/Li.

Un matériau répondant à cette spécificité peut être un matériau du type matériau lithié à structure spinelle, ce matériau étant connu sous l'appellation de « spinelle 5V ».

Ainsi, l'électrode positive peut comprendre, comme matériau actif, au moins un oxyde lithié comprenant du manganèse de structure spinelle de formule (XIV) suivante :

LiNi₁₋ₓMn₁₊ₓO₄ (XIV)

dans laquelle 0 <x< 1.

En particulier, un oxyde lithié conforme à cette définition et particulièrement avantageux est l'oxyde de formule LiNi_{0,4}Mn_{1,6}O₄ ou LiNi_{0,5}Mn_{1,5}O₄, qui présente la particularité de présenter un potentiel d'insertion/désinsertion du lithium de l'ordre de 4,7 V (ce potentiel étant exprimé par rapport au couple de référence Li+/Li).

En variante des oxydes lithiés susmentionnés de formule (XIV) susmentionnée, l'électrode positive peut comprendre, comme matériau actif, un oxyde lithié de formule (XV) ou (XVI) suivante :

LiNi₁₋ₓCoₓO₂ (XV)

LiNiₓ₁Mn_{y1}CO_{z1}O₂ (XVI)

dans lesquelles 0 <x< 1 ; 0 <x1, y1, z1 < 1 et x1+y1+z1=1.

Comme autres matériaux actifs, l'électrode positive peut comprendre également un matériau de formule LiM¹PO₄, dans laquelle M¹ est un élément de transition, des matériaux de ce type pouvant être LiCoPO₄ ou LiNiPO₄ ou LiFePO₄.

Outre la présence d'un matériau à insertion de lithium, l'électrode positive peut comprendre :
- au moins un matériau conducteur électronique ;
- au moins un liant pour assurer la cohésion entre ledit matériau à insertion de lithium et ledit matériau conducteur électronique ; et
- éventuellement, des fibres conductrices électroniques.

Le matériau conducteur électronique peut être, de préférence, un matériau carboné, à savoir un matériau comprenant du carbone à l'état élémentaire.

On peut citer comme matériau carboné, du noir de carbone.

Le liant peut être, de préférence, un liant polymérique, Parmi les liants polymériques susceptibles d'être utilisés, on peut citer :
*les (co)polymères fluorés éventuellement conducteurs de protons, tels que les polymères fluorés, tels qu'un polytétrafluoroéthylène (connu sous l'abréviation PTFE), un polyfluorure de vinylidène (connu sous l'abréviation PVDF) ;
*les polymères élastomères, tels qu'un copolymère styrène-butadiène (connu sous l'abréviation SBR);
*les polymères de la famille des celluloses, tels qu'une carboxyméthylcellulose (connue sous l'abréviation CMC) ; et
*les mélanges de ceux-ci.

Les fibres conductrices électroniques, lorsqu'elles sont présentes, peuvent participer, en outre, à la bonne tenue mécanique de l'électrode positive et sont choisies, à cet effet, de sorte à présenter un module d'Young très important. Des fibres adaptées à cette spécificité peuvent être des fibres de carbone, telles que des fibres de carbone du type Tenax® ou VGCF-H®. Les fibres de carbone Tenax® contribuent à améliorer les propriétés mécaniques et présentent une bonne conductivité électrique. Les fibres de carbone VGCF-H® sont des fibres synthétisées par vapeur et contribuent à améliorer les propriétés thermiques et électriques, la dispersion et l'homogénéité.

L'électrode négative peut comprendre, comme matériau actif, un matériau qui peut être du carbone, par exemple, sous l'une de ses formes allotropiques, telles que le graphite, du silicium, un oxyde simple de lithium, tel que LiTiO₂, un oxyde mixte de lithium, tel que Li₄Ti₅O₁₂.

Outre la présence d'un matériau actif, l'électrode négative peut comprendre :
- au moins un matériau conducteur électronique ;
- au moins un liant pour assurer la cohésion entre ledit matériau à insertion de lithium et ledit matériau conducteur électronique ; et
- éventuellement, des fibres conductrices électroniques.

Le matériau conducteur électronique, le liant et les éventuelles fibres conductrices électroniques peuvent être de même nature que ceux explicités plus haut pour l'électrode positive.

Avantageusement, l'électrode positive comprend, comme matériau actif, un matériau actif de formule (XIV) telle que définie ci-dessus, par exemple, LiNi_{0,4}Mn_{1,6}O₄ ou LiNi_{0,5}Mn_{1,5}O₄ et l'électrode négative comprend, comme matériau actif, du graphite.

Que ce soit pour l'électrode positive ou l'électrode négative, elles peuvent être associées à un collecteur de courant, qui peut se présenter sous forme d'une feuille métallique. Il peut s'agir notamment d'un collecteur de courant en aluminium.

Au sein des batteries conformes à l'invention, l'électrolyte de l'invention peut être amené, dans les cellules électrochimiques des batteries au lithium, telles que les batteries lithium-ion, à imprégner un séparateur, lequel est disposé entre l'électrode positive et l'électrode négative de la cellule électrochimique.

Ce séparateur peut être en un matériau poreux, tel qu'un matériau en fibres de verre, un matériau polymérique, tel que du polypropylène, du polyéthylène, de la cellulose, apte à accueillir dans sa porosité l'électrolyte liquide. Plus spécifiquement, il peut s'agir d'une membrane de type Celgard 2400®.

L'invention va maintenant être décrite, en référence aux exemples suivants, donnés à titre indicatif et non limitatif.

### BREVE DESCRIPTION DES FIGURES

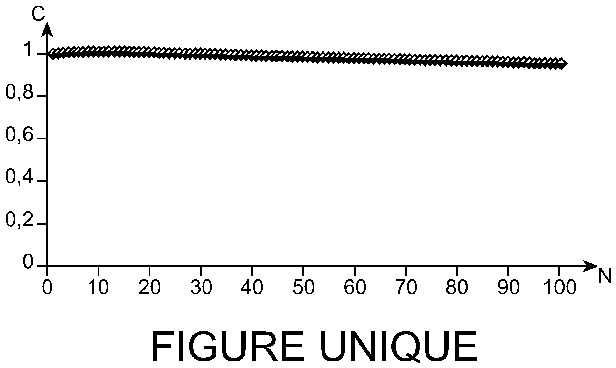

La figure unique est un graphique illustrant l'évolution de la capacité de décharge normalisée C en fonction du nombre de cycles N pour une batterie de l'exemple 2.

### EXPOSÉ DÉTAILLÉ DE MODES DE RÉALISATION PARTICULIERS

Les exemples, qui suivent, ont été mis en œuvre pour illustrer l'apport des liquides ioniques spécifiques définis ci-dessus en tant qu'additif dans un électrolyte à base d'au moins un solvant carbonate et d'un sel de lithium dans une batterie lithium-ion.

### EXEMPLE 1

Cet exemple illustre la préparation de 4 électrolytes (dits respectivement premier électrolyte à quatrième électrolyte, le premier électrolyte et le quatrième électrolyte étant des électrolytes non conformes à l'invention.

### a) Préparation d'un premier électrolyte

Le premier électrolyte est préparé dans une boîte à gants par dissolution de 1 mol/L de LiPF₆ (procuré auprès du fournisseur Fluorochem) dans un mélange constitué de 30% en volume de carbonate d'éthylène (procuré auprès du fournisseur Merck) et de 70% en volume d'éthylméthylcarbonate (procuré auprès du fournisseur Merck).

### b) Préparation d'un deuxième électrolyte

Un électrolyte est préparé dans une boîte à gants par dissolution de 1 mol/L de LiPF₆ (procuré auprès du fournisseur Fluorochem) dans un mélange de solvants constitué de 30% en volume de carbonate d'éthylène (procuré auprès du fournisseur Merck) et de 70% en volume d'éthylméthylcarbonate (procuré auprès du fournisseur Merck).

Il est ajouté ensuite 1% massique de *bis*(oxalato)borate de 1-n-butyl-1-méthylpyrrolidinium par rapport à la masse totale de l'électrolyte.

### c) Préparation d'un troisième électrolyte

Un électrolyte est préparé dans une boîte à gants par dissolution de 1 mol/L de LiPF₆ (procuré auprès du fournisseur Fluorochem) dans un mélange de solvants constitué de 30% en volume de carbonate d'éthylène (procuré auprès du fournisseur Merck) et de 70% en volume d'éthylméthylcarbonate (procuré auprès du fournisseur Merck).

Il est ajouté ensuite 2% massique de *bis*(oxalato)borate de 1-n-butyl-1-méthylpyrrolidinium par rapport à la masse totale de l'électrolyte.

### d) Préparation d'un quatrième électrolyte

Un électrolyte est préparé dans une boîte à gants par dissolution de 1 mol/L de LiPF₆ (procuré auprès du fournisseur Fluorochem) dans un mélange de solvants constitué de 30% en volume de carbonate d'éthylène (procuré auprès du fournisseur Merck) et de 70% en volume d'éthylméthylcarbonate (procuré auprès du fournisseur Merck).

Il est ajouté ensuite 1% massique de bis(oxalato)borate de lithium (LiBOB) par rapport à la masse totale de l'électrolyte.

### EXEMPLE 2

Cet exemple illustre la préparation de piles du type bouton comprenant les électrolytes de l'exemple 1 (soit quatre piles-boutons distinctes) et la détermination des performances des piles ainsi obtenues en termes de perte de capacité et/ou d'efficacité coulombique.

### a) Composants des piles-boutons

Les composants de chaque pile-bouton sont les suivants :
- une électrode positive de diamètre 16 mm et d'une capacité de 1,17 mAh/cm² déposée sur une feuille d'aluminium, dont la face supérieure de l'électrode positive est recouverte d'un mélange composé de LiNi_{0,5}Mn_{1,5}O₄ (90% massique) (matériau actif), de carbone du type Super P (5% massique) et d'un liant organique de type PVDF (5% massique) ;
- un séparateur Celgard 2400 et un séparateur Viledon de diamètres 16,5 mm ;
- une électrode négative de diamètre 16 mm et d'une capacité de 1,4 mAh/cm², déposée sur une feuille de cuivre, dont la face de l'électrode négative en contact avec le séparateur (face inférieure) est recouverte d'un mélange composé de graphite (89 % massique) (matériau actif), de noir de carbone (3% massique) et de liant (8% massique).

### b) Réalisation des piles-boutons

L'assemblage des différents composants est réalisé en boîte à gants sous argon par superposition successive d'un couvercle inférieur doté d'un joint d'étanchéité, d'une cale en inox, d'un disque d'électrode positive (avec la couche de matériau actif en position supérieure), de deux disques de séparateurs imbibé de l'électrolyte à évaluer (150 µL), d'un disque d'électrode négative (avec la couche de matériau actif en position inférieure), d'une cale inox, d'un ressort et d'un couvercle supérieur.

L'ensemble est ensuite serti par pressage dans la boîte à gants.

### c) Détermination des performances des piles boutons

### -Protocole expérimental-Cyclage court

Dans ce protocole, les piles concernées subissent une séquence de cyclage à 20°C selon un régime de charge/décharge établi sur la base de la capacité de l'électrode positive. La séquence se déroule de la manière suivante :
- 2 pré-cycles à un régime de charge de C/20 et de décharge de D/20, chaque cycle comprenant successivement une charge jusqu'à 4,9 V puis une décharge jusqu'à 3,5 V ;
- 30 cycles à un régime de charge de C/3 et de décharge à D/3, chaque cycle comprenant successivement une charge jusqu'à 4,9 V puis une décharge jusqu'à 3,5 V.

### -Protocole expérimental-Cyclage long

Dans ce protocole, les piles concernées subissent une séquence de cyclage à 20°C selon un régime de charge/décharge établi sur la base de la capacité de l'électrode positive. La séquence se déroule de la manière suivante :
- 2 pré-cycles à un régime de charge de C/20 et de décharge de D/20, chaque cycle comprenant successivement une charge jusqu'à 4,9 V puis une décharge jusqu'à 3,5 V ;
- 100 cycles à un régime de charge de C/3 et de décharge à D/3, chaque cycle comprenant successivement une charge jusqu'à 4,9 V puis une décharge jusqu'à 3,5 V.

### -Détermination de la perte de capacité selon protococole expérimental-Cyclage court

A l'issue de la séquence, la perte de capacité est déterminée comme étant la perte de capacité entre la première décharge (après les deux cycles de formation) et la 30^{ème} décharge en régime D/3.

Les résultats sont reportés dans le tableau ci-dessous en fonction de l'électrolyte utilisé.

| Electrolyte | % Perte de capacité |
|---|---|
| Premier électrolyte | 7,3 |
| Deuxième électrolyte | 0,1 |
| Troisième électrolyte | -0,4 |
| Quatrième électrolyte | 2,1 |

Il apparaît clairement que les piles conformes à l'invention (celles avec le deuxième électrolyte et le troisième électrolyte) présentent une perte de capacité significativement inférieure à celle de la pile ne comportant pas un additif spécifique du type liquide ionique comme défini dans l'invention.

Par rapport au quatrième électrolyte, cela prouve également que le choix du cation du type pyrrolidinium permet d'obtenir de meilleurs résultats en termes de perte de capacité qu'un cation Li⁺ comme dans le LiBOB.

### -Détermination de l'efficacité coulombique selon protocole expérimental-Cyclage court

A l'issue de la séquence, la perte de capacité est déterminée comme étant le rapport entre la capacité de décharge et de charge au 30^{ème} cycle en régime C/3.

Les résultats sont reportés dans le tableau ci-dessous en fonction de l'électrolyte utilisé.

| Electrolyte | Efficacité coulombique |
|---|---|
| Premier électrolyte | 99,1 |
| Deuxième électrolyte | 99,5 |
| Troisième électrolyte | 99,6 |

Il apparaît pour les piles conformes à l'invention (celles avec le deuxième électrolyte et le troisième électrolyte) une amélioration de l'efficacité coulombique par rapport à celle de la pile ne comportant pas un additif spécifique du type liquide ionique comme défini dans l'invention.

### -Evolution de la capacité au cours des cycles en régime C/3 à 20°C (après 2 pré-cycles en C/20) avec le deuxième électrolyte-Protocole expérimental-Cyclage long

Il est mesuré l'évolution de la capacité au cours des cycles en régime C/3 (après 2 pré-cycles en C/20) avec le deuxième électrolyte, les résultats étant reportés sur la figure unique jointe en annexe, qui représente l'évolution de la capacité de décharge normalisée C en fonction du nombre de cycles N.

Il apparaît clairement que la capacité de décharge reste stable en fonction du nombre de cycles.

### EXEMPLE 3

Cet exemple illustre la préparation d'un électrolyte conforme à l'invention comprenant, en outre, de l'anhydride maléique.

Cet électrolyte est préparé dans une boîte à gants par dissolution de 1 mol/L de LiPF₆ (procuré auprès du fournisseur Fluorochem) dans un mélange constitué de 30% en volume de carbonate d'éthylène (procuré auprès du fournisseur Merck) et de 70% en volume d'éthylméthylcarbonate (procuré auprès du fournisseur Merck). Il est ajouté ensuite 1% en masse d'anhydride maléique et 1% en masse de *bis*(oxalato)borate de 1-n-butyl-1-méthylpyrrolidinium par rapport à la masse totale de l'électrolyte.

Cet électrolyte est incorporé ensuite dans une pile-bouton similaire à celle de l'exemple 2 ci-dessus et il est déterminé la perte de capacité au moyen du protocole expérimental-cyclage court à respectivement 20°C et 45°C. Il ressort une évolution en % de la perte de capacité par rapport au deuxième électrolyte de l'exemple 2 ci-dessus de -437 pour 20°C et -44 pour 45°C, ce qui atteste d'une amélioration substantielle pour l'électrolyte incorporant, en plus de l'anhydride maléique.

## Revendications

1. Electrolyte conducteur d'ions lithium comprenant au moins un solvant organique non fluoré et au moins un sel de lithium, **caractérisé en ce qu'**il comprend, en outre, un liquide ionique non fluoré constitué par l'association d'un cation qui est un composé comportant au moins un atome d'azote, dont la charge positive est portée par ledit atome d'azote et d'un anion borate, le cation répondant à la formule (X) suivante : 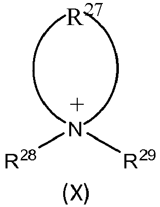 dans laquelle :
- N⁺ et R²⁷ forment ensemble un groupe alicyclique ;
- R²⁸ et R²⁹ représentent, indépendamment l'un de l'autre, un groupe alkyle linéaire comprenant de 1 à 5 atomes de carbone.

2. Electrolyte selon la revendication 1, qui est constitué exclusivement dudit au moins un solvant organique non fluoré, dudit au moins un sel de lithium et dudit liquide ionique non fluoré.

3. Electrolyte selon la revendication 1 ou 2, dans lequel le au moins un solvant organique est choisi parmi les solvants sulfones, les solvants carbonates et les mélanges de ceux-ci.

4. Electrolyte selon l'une quelconque des revendications précédentes, dans lequel le au moins un solvant organique est choisi parmi les solvants carbonates linéaires, les solvants carbonates cycliques et les mélanges de ceux-ci.

5. Electrolyte selon la revendication 4, dans lequel les solvants carbonates linéaires répondent à la formule (I) suivante :
R¹-O-CO-O-R² (I)
dans laquelle R¹ et R² représentent, indépendamment, l'un de l'autre, un groupe alkyle linéaire ou ramifié comportant de 1 à 7 atomes de carbone.

6. Electrolyte selon la revendication 4, dans lequel les solvants carbonates cycliques répondent à la formule (II) suivante : 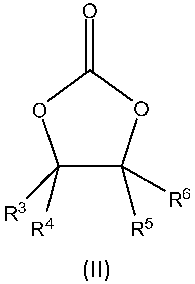 dans laquelle R³ à R⁶ représentent, indépendamment l'un de l'autre, un atome d'hydrogène, un groupe alkyle, linéaire ou ramifié, comportant de 1 à 7 atomes de carbone.

7. Electrolyte selon l'une quelconque des revendications précédentes, dans lequel le cation est choisi parmi les cations pipéridinium, les cations pyrrolidinium.

8. Electrolyte selon l'une quelconque des revendications précédentes, dans lequel l'anion est un anion *bis*(oxalato)borate répondant à la formule (XII) suivante :

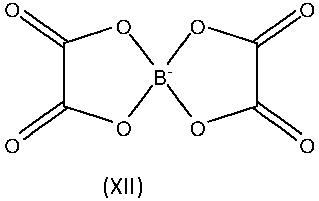

9. Electrolyte selon l'une quelconque des revendications précédentes, dans lequel le liquide ionique résulte de l'association d'un cation pyrrolidinium et d'un anion de formule (XII) telle que définie à la revendication 8.

10. Electrolyte selon l'une quelconque des revendications précédentes, dans lequel le liquide ionique est présent dans l'électrolyte selon un teneur allant de 0,1% à 10% en masse par rapport à la masse totale de l'électrolyte.

11. Electrolyte selon l'une quelconque des revendications précédentes, dans lequel le sel de lithium est de l'hexafluorophosphate de lithium (LiPF₆), de l'hexafluoroarsénate de lithium (LiAsF₆), du *bis*(trifluorométhylsulfonyl)imidure de lithium, du bis(fluorosulfonyl)imidure de lithium, du tétrafluoroborate de lithium (LiBF₄), du perchlorate de lithium (LiClO₄).

12. Electrolyte selon la revendication 1, qui comprend, en outre, un ou plusieurs autres additifs de type anhydride.

13. Batterie au lithium comprenant au moins une cellule électrochimique comprenant un électrolyte tel que défini selon l'une quelconque des revendications 1 à 12, disposé entre une électrode positive et une électrode négative.

14. Batterie au lithium selon la revendication 13, dans laquelle l'électrode positive comprend, comme matériau actif, un composé de l'une des formules (XIV) à (XVI) suivantes :
LiNi₁₋ₓMn₁₊ₓO₄ (XIV)
LiNi₁₋ₓCoₓO₂ (XV)
LiNiₓ₁Mn_{y1}Co_{z1}O₂ (XVI)
dans lesquelles 0 <x< 1 ; 0 <x< 1, 0 <x1, y1, z1 < 1 et x1+y1+z1=1.

15. Batterie au lithium selon la revendication 13 ou 14, dans laquelle l'électrode négative comprend, comme matériau actif, un matériau qui est choisi parmi :
- du carbone, par exemple, sous l'une de ses formes allotropiques, telles que le graphite ;
- du silicium ;
- un oxyde simple ou mixte de lithium.

## Patentansprüche

1. Lithiumionenleitender Elektrolyt, der mindestens ein nicht-fluoriertes organisches Lösungsmittel und mindestens ein Lithiumsalz umfasst, **dadurch gekennzeichnet, dass** er darüber hinaus eine nicht-fluorierte ionische Flüssigkeit umfasst, die aus einem Kation besteht, bei welchem es sich um eine Verbindung handelt, die mindestens ein Stickstoffatom aufweist, dessen positive Ladung von dem Stickstoffatom getragen wird, und welches gemeinsam mit einem Borat-Anion vorliegt, wobei das Kation der folgenden Formel (X) entspricht: 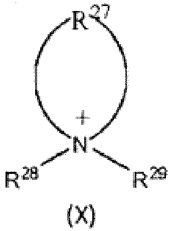 wobei:
- N⁺ und R²⁷ zusammen eine alizyklische Gruppe bilden;
- R²⁸ und R²⁹, unabhängig voneinander, für eine geradkettige Alkylgruppe stehen, die 1 bis 5 Kohlenstoffatome umfasst.

2. Elektrolyt nach Anspruch 1, wobei dieser ausschließlich aus dem mindestens einen nicht-fluorierten organischen Lösungsmittel, dem mindestens einen Lithiumsalz und der nicht-fluorierten ionischen Flüssigkeit besteht.

3. Elektrolyt nach Anspruch 1 oder 2, wobei das mindestens eine organische Lösungsmittel aus den Sulfonlösungsmitteln, den Carbonatlösungsmitteln und aus deren Mischungen ausgewählt ist.

4. Elektrolyt nach einem beliebigen der vorhergehenden Ansprüche, wobei das mindestens eine organische Lösungsmittel aus den geradkettigen Carbonatlösungsmitteln, den zyklischen Carbonatlösungsmitteln und aus deren Mischungen ausgewählt ist.

5. Elektrolyt nach Anspruch 4, wobei die geradkettigen Carbonatlösungsmittel der folgenden Formel (I) entsprechen:
R¹-O-CO-O-R² (I)
wobei R¹ und R², unabhängig voneinander, für eine geradkettige oder verzweigte Alkylgruppe stehen, die 1 bis 7 Kohlenstoffatome umfasst.

6. Elektrolyt nach Anspruch 4, wobei die zyklischen Carbonatlösungsmittel der folgenden Formel (II) entsprechen: 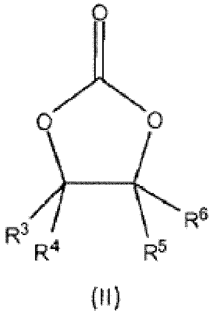 wobei R³ und R⁶, unabhängig voneinander, für ein Wasserstoffatom, für eine geradkettige oder verzweigte Alkylgruppe stehen, die 1 bis 7 Kohlenstoffatome umfasst.

7. Elektrolyt nach einem beliebigen der vorhergehenden Ansprüche, wobei das Kation aus den Piperidinium-Kationen, den Pyrrolidinium-Kationen ausgewählt ist.

8. Elektrolyt nach einem beliebigen der vorhergehenden Ansprüche, wobei es sich bei dem Anion um ein bis-(Oxalato)borat-Anion handelt, das der folgenden Formel (XII) entspricht:

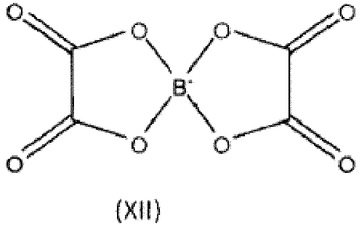

9. Elektrolyt nach einem beliebigen der vorhergehenden Ansprüche, wobei sich die ionische Flüssigkeit ergibt, indem ein Pyrrolidinium-Kation und ein Anion der Formel (XII) gemäß der Begriffsbestimmung in Anspruch 8 gemeinsam vorliegen.

10. Elektrolyt nach einem beliebigen der vorhergehenden Ansprüche, wobei die ionische Flüssigkeit in dem Elektrolyten derart vorliegt, dass ihr Gehalt 0,1 % bis 10 % nach Masse beträgt, bezogen auf die Gesamtmasse des Elektrolyten.

11. Elektrolyt nach einem beliebigen der vorhergehenden Ansprüche, wobei es sich bei dem Lithiumsalz um Lithiumhexafluorphosphat (LiPF₆), Lithiumhexafluorarsenat (LiAsF₆), Lithium-bis-(trifluormethylsulfonyl)imid, Lithium-bis-(fluorsulfonyl)imid, Lithiumtetrafluorborat (LiBF₄), Lithiumperchlorat (LiClO₄) handelt.

12. Elektrolyt nach Anspruch 1, welcher darüber hinaus ein oder mehrere weitere Additive vom Typ Anhydrid umfasst.

13. Lithiumbatterie, die mindestens eine elektrochemische Zelle umfasst, welche einen Elektrolyten gemäß der Begriffsbestimmung in einem beliebigen der Ansprüche 1 bis 12 umfasst, wobei dieser zwischen einer positiven Elektrode und einer negativen Elektrode angeordnet ist.

14. Lithiumbatterie nach Anspruch 13, wobei die positive Elektrode als aktives Material eine Verbindung nach einer der folgenden Formeln (XIV) bis (XVI) umfasst:
LiNi₁₋ₓMn₁₊ₓO₄ (XIV)
LiNi₁₋ₓCoₓO₂ (XV)
LiNiₓ₁Mn_{y1}Co_{z1}O₂ (XVI)
wobei 0 < x < 1; 0 < x < 1, 0 < x1, y1, z1 < 1 und x1+y1+z1 = 1.

15. Lithiumbatterie nach Anspruch 13 oder 14, wobei die negative Elektrode als aktives Material ein Material umfasst, welches aus den folgenden ausgewählt ist:
- Kohlenstoff, beispielsweise in einer von dessen allotropen Formen wie etwa Graphit;
- Silicium;
- ein einfaches Oxid oder ein Mischoxid von Lithium.

## Claims

1. A lithium ion conducting electrolyte comprising at least one non-fluorinated organic solvent and at least one lithium salt, **characterised in that** it further comprises a non-fluorinated ionic liquid consisting of the association of a cation which is a compound including at least one nitrogen atom, the positive charge of which is carried by said nitrogen atom and a borate anion, the cation corresponding to the following formula (X): 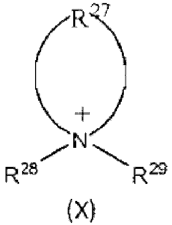 wherein:
- N⁺ and R²⁷ form together an alicyclic group;
- R²⁸ and R²⁹ represent, independently of each other, a linear alkyl group comprising from 1 to 5 carbon atoms.

2. The electrolyte according to claim 1, which consists exclusively of said at least one non-fluorinated organic solvent, said at least one lithium salt and said non-fluorinated ionic liquid.

3. The electrolyte according to claim 1 or 2, wherein at least one organic solvent is selected from sulfonated solvents, carbonate solvents and mixtures thereof.

4. The electrolyte according to any one of the preceding claims, wherein the at least one organic solvent is selected from linear carbonate solvents, cyclic carbonate solvents and mixtures thereof.

5. The electrolyte according to claim 4, wherein the linear carbonate solvents correspond to the following formula (I):
R¹-O-CO-O-R² (I)
wherein R¹ and R² represent, independently of each other, a linear or branched alkyl group including from 1 to 7 carbon atoms.

6. The electrolyte according to claim 4, wherein the cyclic carbonate solvents correspond to the following formula (II): 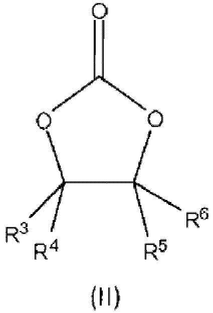 wherein R³ to R⁶ represent, independently of each other, a hydrogen atom, a linear or branched alkyl group including from 1 to 7 carbon atoms.

7. The electrolyte according to any one of the preceding claims, wherein the cation is selected from piperidinium cations and pyrrolidinium cations.

8. The electrolyte according to any one of the preceding claims, wherein the anion is a bis(oxalato) borate anion corresponding to the following formula (XII):

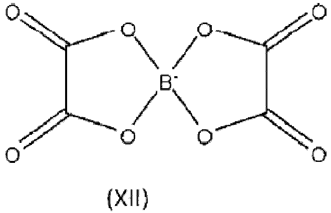

9. The electrolyte according to any one of the preceding claims, wherein the ionic liquid results from the association of a pyrrolidinium cation and an anion of formula (XII) as defined in claim 8.

10. The electrolyte according to any one of the preceding claims, wherein the ionic liquid is present in the electrolyte in an amount ranging from 0.1% to 10% by mass relative to the total mass of the electrolyte.

11. The electrolyte according to any one of the preceding claims, wherein the lithium salt is lithium hexafluorophosphate (LiPF₆), lithium hexafluoroarsenate (LiAsF₆), lithium bis(trifluoromethylsulfonyl) imide, lithium bis(fluorosulfonyl) imide, lithium tetrafluoroborate (LiBF₄), lithium perchlorate (LiClO₄).

12. The electrolyte according to claim 1, which further comprises one or more other additives of the anhydride type.

13. A lithium battery comprising at least one electrochemical cell comprising an electrolyte as defined in any one of claims 1 to 12, disposed between a positive electrode and a negative electrode.

14. The lithium battery according to claim 13, wherein the positive electrode comprises, as an active material, a compound of one of the following formulas (XIV) to (XVI):
LiNi₁₋ₓMn₂₊ₓO₄ (XIV)
LiNi₁₋ₓCoₓO₂ (XV)
LiNiₓ₁Mn_{y1}Co_{z1}O₂ (XVI)
wherein 0 <x< 1; 0 <x< 1, 0 <x1, y1, z1 < 1 and x1+y1+z1 = 1.

15. The lithium battery according to claim 13 or 14, wherein the negative electrode comprises, as an active material, a material which is selected from:
- carbon, for example, in one of its allotropic forms, such as graphite;
- silicon;
- a single or mixed lithium oxide.
